**Europäisches Patentamt**

**European Patent Office**

**Office européen des brevets**

(19)

(11) Veröffentlichungsnummer: **0 037 950**
**A1**

(12) # EUROPÄISCHE PATENTANMELDUNG

(21) Anmeldenummer: **81102384.5**

(22) Anmeldetag: **30.03.81**

(51) Int. Cl.³: **F 04 B 49/08,** G 05 D 16/06, F 16 K 7/07

(30) Priorität: **10.04.80 DE 3013872**

(43) Veröffentlichungstag der Anmeldung: **21.10.81**
**Patentblatt 81/42**

(84) Benannte Vertragsstaaten: **BE CH DE FR GB IT LI NL**

(71) Anmelder: **AGFA-GEVAERT Aktiengesellschaft, Patentabteilung, D-5090 Leverkusen 1 (DE)**

(72) Erfinder: **Friedsam, Josef, Götscherweg 49, D-4018 Langenfeld (DE)**

(54) **Verfahren und Vorrichtung zur selbsttätigen Druckkonstanthaltung.**

(57) In einem Verfahren und einer Vorrichtung wird zur selbsttätigen Druckkonstanthaltung zwischen eine Zwangsfördereinrichtung (1) und einen Verbraucher (7) ein elastisches Membranglied (2) so angeordnet, daß die Membrane (3) auf der einen Seite dem strömenden Medium (6) ausgesetzt und auf der anderen Seite über ein Druckreduzierventil (5) mit einem Druck beaufschlagt wird, der größer als der maximal zu erwartende Druck im System und die strömende Menge mittels der Drehzahl der Zwangsfördereinrichtung (1) eingestellt wird.

AGFA-GEVAERT
AKTIENGESELLSCHAFT      5090 Leverkusen, Bayerwerk
Patentabteilung      HRS/0

Verfahren und Vorrichtung zur selbsttätigen Druckkonstanthaltung

Die Erfindung betrifft ein Verfahren und eine Vorrichtung
zur selbsttätigen Druckkonstanthaltung für strömende
Medien bei Zwangsförderung.

Es ist bekannt, daß beim Einsatz von Zwangsfördermitteln,
wie Zahnradpumpen, Kolbenpumpen oder Wälzkörperpumpen
zur genauen Dosierung von strömenden Medien die Förderleistung unter anderem in hohem Maße vom Differenzdruck
an den Pumpen abhängig ist. Bei kritischen strömenden
Medien, zum Beispiel Flüssigkeiten, die zur Sedimentation, Verkrustung und damit zur Belagsbildung in den
Rohleitungen oder anderen zu durchströmenden Elementen
neigen, treten in hohem Maße veränderliche Druckdifferenzen
auf, die bei einer konstanten Drehzahl der Pumpen zu
sehr unterschiedlichen Fördermengen führen.

Die Drehzahl der Zwangsfördermittel wird üblicherweise
mit einem Sollwert vorgegeben und mit einer den Anforderung entsprechenden Drehzahlregeleinrichtung
konstant auf dem vorgegeben Sollwert gehalten. Nachteilig ist hierbei, daß alle den Wirkungsgrad beein-

AG 1703-EP

flussende Größen, wie zum Beispiel auch der veränderliche Druck vor und hinter den Zwangsfördermitteln zu einer Änderung der Förderleistung führen.

Eine Einbeziehung des Differenzdruckes in die Regelfunktion der Drehzahlregelung der Pumpen würde neben einer sehr aufwendigen Differenzdruckmessung und -regelung auch eine genaue Kenntnis und Berücksichtigung des Druckeinflusses auf das Förderverhalten der jeweils benutzten Pumpen voraussetzen. Die Einflußfaktoren, die eine Änderung der Förderleistung in Abhängigkeit vom Differenzdruck bewirken sind sehr zahlreich, so daß es in der Praxis aufgrund mangelnder technischer Möglichkeiten nicht möglich ist, alle zu erfassen und bei der Drehzahlregelung zu berücksichtigen, zumal einige der Einflußfaktoren über eine längere Betriebszeit der Pumpen in erheblichem Maße veränderlich sind, wie zum Beispiel der wichtige Faktor des mechanischen Zustandes der Pumpe.

Es ist bekannt die Drehzahl der Zwangsfördermittel in Abhängigkeit der Durchflußmenge mit einem Durchflußmengen- Meßgerät kontinuierlich zu regeln.

Dies hat den Nachteil, daß bei einer Verschmutzung des Meßgerätes durch das durchströmende Medium falsche Istwerte für die Durchflußmenge ermittel werden, die falsche Drehzahlen der Pumpe und somit unerwünschte Änderungen der Förderleistung hervorrufen.

AG 1703

- 3 -

Der Erfindung liegt daher die Aufgabe zugrunde ein einfaches Verfahren und eine Vorrichtung zu finden, die es ermöglichen, die Förderleistung bei einer Zwangsförderung von einem veränderlichen Differenzdruck unabhängig zu machen und den Druck selbsttätig konstant zu halten.

Es wurde überraschenderweise gefunden, daß sich die Aufgabe in einfacher Weise dadurch lösen läßt, daß zwischen einer Zwangsfördereinrichtung und einem Verbraucher ein elastisches Membranglied so angeordnet wird, daß die Membrane des Membrangliedes auf der einen Seite dem strömendem Medium und auf der anderen Seite über ein Druckreduzierventil mit einem Druck beaufschlagt wird, der größer ist als der maximal zu erwartende Druck in dem System zwischen der Zwangsfördereinrichtung und dem Verbraucher und daß die Menge des strömenden Mediums mittels der Drehzahl der Zwangsfördereinrichtung eingestellt und geregelt wird.

Für den Fachmann war nicht zu erwarten, daß mit einem so einfachen Verfahren der Einfluß einer veränderlichen Druckdifferenz auf die Förderleistung einer Pumpe kompensiert werden kann.

Vorteilhafterweise wird in dem Verfahren das Membranglied unmittelbar hinter der Zwangsfördereinrichtung angeordnet, um alle durch Sedimentationverkrustung usw. auftretende Einflüsse im System mit zu erfassen.

AG 1703

- 4 -

Der Mindestdruck des Druckmediums von der äußeren
Seite auf die Membran wird so gewählt, daß die
Membrane des Membrangliedes den Durchgang für das
flüssige Medium von der Zwangsfördereinrichtung zum
Verbraucher vollständig schließt, wenn die Zwangsfördereinrichtung nicht arbeitet. Mit dieser Maßnahme
entsteht einerseits eine exakt regelbare Kapillare
und andererseits ein Verschluß der bei Stillstand
der Zwangsfördereinrichtung als Rückschlagventil
wirkt.

Die überraschend einfache Vorrichtung zur Durchführung
des Verfahrens zeichnet sich dadurch aus, daß ein
Einlaufstutzen mittels Gewinde mit einem Rohrkörper und der Rohrkörper mittels Überwurfmutter
mit einem Auslaufstutzen so verbunden ist, daß eine
elastische Membran mit ihren verdickten Enden abdichtend eingespannt ist und ein dichter Druckraum
innerhalb des Rohrkörpers und außerhalb der Membrane
ensteht und der Raum über einen Druckstutzen mit
einem Druckmedium mit Überdruck beaufschlagbar
ist.

Der einfache und zweckmäßige Aufbau der Vorrichtung
als Membranglied, welches zwischen der Zwangsfördereinrichtung und dem Verbraucher in jede Rohr- oder
Schlauchleitung eingebaut werden kann, ist in seiner
Funktion äußerst sicher und für jedes flüssige
Medium geeignet. Das Membranglied ermöglicht es,

<u>AG 1703</u>

die Förderleistung bei einer Zwangsförderung von einem veränderlichen Differenzdruck unabhängig zu machen und den Druck im System selbsttätig konstant zu halten.

Eine besonders zweckmäßige Ausführungsform zeichnet sich dadurch aus, daß in dem Membranglied der Rohrkörper an der Seite des Einlaufstutzens mit einem eingearbeiteten Dichtungs- und Gewindering zur Aufnahme des Einlaufstutzens und zum Spannen und Abdichten der Membran mittels einer Spannmutter so versehen ist, daß die Membrane nach Lösen der Überwurfmutter zusammen mit dem Einlaufstutzen und Auslaufstutzen in Richtung Pfeil 7 zum Reinigen oder Erneuern der Membran herausdrehbar ist.

Diese Ausführung erlaubt es, die Membran mit wenigen Handgriffen auszutauschen oder zu säubern, wenn sich Verkrustungen gebildet haben sollten oder wenn die Membran nach langer Betriebszeit ausgetauscht werden soll.

Die Arbeitsweise, Funktion und weitere Vorteile werden anhand der Zeichnungen und Diagramme erläutert. Es zeigen

Figur 1    eine schematische Darstellung einer automatischen Druckkonstanthaltevorrichtung in einem System, bestehend aus Zwangsfördereinrichtung und Verbraucher

AG 1703

Figur 2    eine Ausführungsform eines Membrangliedes
für die automatische Druckkonstanthaltevorrichtung

Figur 3    ein Beispiel für die Abhängigkeit des Pumpenfaktores (f) von der Druckdifferenz $\triangle$ P
bei einer Zahnradpumpe

Figur 4    eine Darstellung des Druckes an der Pumpe
Pp in Abhängigkeit vom Vordruck Pv im
Membranglied und einem veränderlichen Systemdruck Ps.

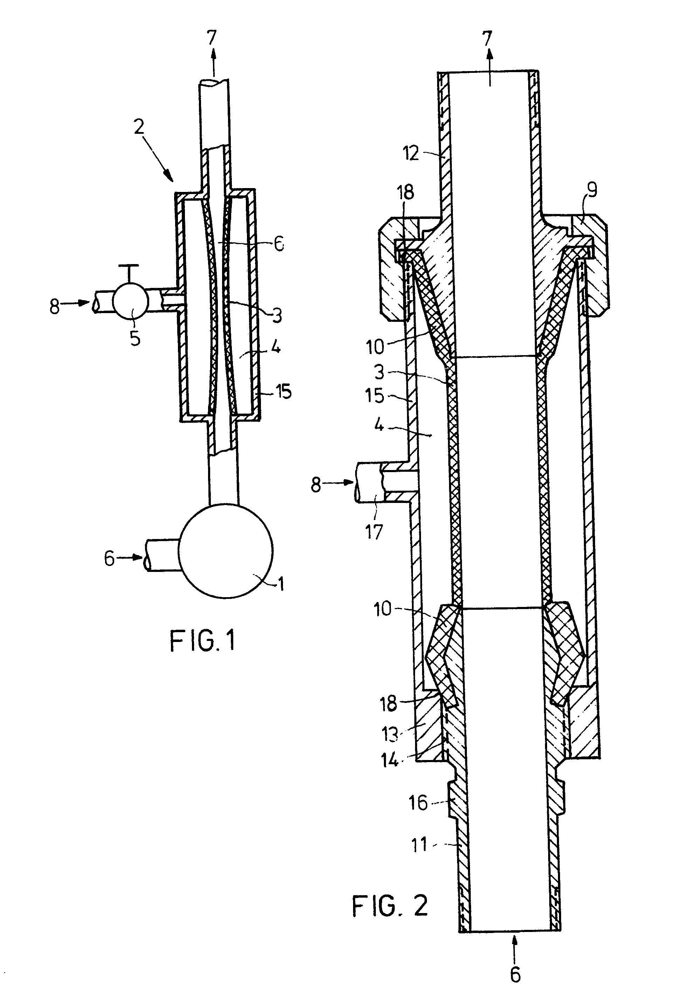

Figur 1 zeigt ein System bestehend aus einer Zwangsfördereinrichtung 1, etwa einer Zahnradpumpe, einer
Kolbenpumpe oder einer Wälzkörperpumpe, die ein flüssiges Medium ansaugt und einem Verbraucher 7 zuführt.

Hinter der Pumpe 1 ist eine Membranglied 2 angeordnet,
durch welches das flüssige Medium 6 fließt. Das
Membranglied 2 enthält eine dicht in einem Rohrkörper
15 eingefügte elastische Membrane 3. Der Zwischenraum 4
zwischen Membrane 3 und Rohrkörper 15 wird über eine
Druckregeleinrichtung 5, zum Beispiel eine Reduzierstation, mit einem Druckmedium 8 konstant mit einem
Überdruck beaufschlagt, der deutlich höher ist, als
der, der im nachfolgenden druckveränderlichen System
bis zum Verbraucher 7 maximal zu erwarten ist.

AG 1703

Als Druckmedien 8 können, Luft, Gas oder auch Flüssigkeiten verwendet werden. Mit diesem Membranglied 2 arbeitet die Zwangsfördereinrichtung 1 stets gegen einen konstanten Druck der von dem Druck in dem Raum 4 zwischen der Membrane 3 und dem Rohrkörper 15 bestimmt wird, solange bis der veränderliche Druck im System zwischen dem Membranglied 2 und dem Verbaucher 7 größer wird, als der Druck im Raum 4.

Der Mindesdruck im Raum 4 wird so gewählt, daß die elastische Membran 3 bei einem Stillstand der Pumpe 1 vollständig abschließt. Die elalstische Membrane 3 wirkt so in der Art und Weise wie eine regelbare Kapillare.

Figur 2 zeigt das Beispiel einer konstruktiven Ausbildung des Membrangliedes 2, wie es in eine Schlauch- oder Rohrleitung hinter einer Zwangsfördereinrichtung 1 eingebaut werden kann. Das Membranglied 2 besteht aus einem Rohrkörper 15, der an seinem unteren Ende mit einem eingearbeiteten Dichtungs- und Gewindering 13 und an seinem Oberende mit einem Außengewinde zur Aufnahme einer Überwurfmutter 9 und einem Dichtflächenring 18 versehen ist. An den Rohrköper 15 ist ein Stutzen 17 angeschweißt durch den das Druckmittel 8 zugeführt wird.

Der Einlaufstutzen 11 ist mit dem Auslaufstutzen 12 durch einen Membrankörper 3 verbunden. Der Membran-

AG 1703

körper 3 hat an beiden Enden profilierte Verdickungen 10, die über die Stutzen 11, 12 geschoben werden. Zum Einbau der Membrane 3 in den Rohrkörper 15 wird der Einlaufstutzen 11 mit dem darüber gezogenen verdickten Ende 10 der Membrane 3 von oben in den Rohrkörper 15 eingeführt und durch Drehen des Einlaufstutzens 11 an einem Vier- oder Sechkant einer Spannmutter 16 in dem Gewinde 14 verschraubt.

Hierbei wird das verdickte Ende 10 der Membrane 3 zur Abdichtung gegen einen Dichtflächenring 18 gezogen und die Membrane 3 in dem Rohrkörper 15 gespannt. Die Abdichtung am oberen Ende des Rohrköpers 15 erfolgt durch die Überwurfmutter 9 die den Auslaufstutzen 12 gegen das obere Ende 10 der Membrane 3 und diese gegen den Dichtflächenring 18 des Rohrkörpers 15 preßt. Der Ausbau der Membrane 3 erfolgt in der gleichen Weise. Nach Lösen der Überwurfmutter 9 kann durch Drehen des Einlaufstutzens 11 mittels der Spannmutter 16 die Membrane 3 gelöst und nach oben herausgenommen werden.

Die Erfindung bezieht sich auch auf ähnliche Vorrichtungen mit der gleichen Aufgabe. So ist auch eine Konstruktion unter Verwendung einer flachen eingespannten elastischen Membran denkbar, bei der die Membrane zum Beispiel einen halbrunden Kanal verschließt, wenn ein Druck auf die Membrane ausgeübt wird.

AG 1703

Die wirkungsweise der Druckkonstanthalteeinrichtung
ist folgende:

Die Drehzahl der Zwangsfördereinrichtung 1 wird mit
einem digitalen Antriebssatz konstant gehalten.
Das Membranglied 2 wird über die Reduzierstation 5
mit einem Vordruck Pv beaufschlagt, der deutlich
über dem maximal zu erwartenden Systemdruck Ps
zwischen Membranglied 2 und Verbraucher 7 liegt.

Hiermit werden auftretende Druckerhöhungen im
System zwischen Membranglied 2 und Verbraucher 7
kompensiert. Um unabhängig von dem Pumpenfaktor f
zu werden, wird der Sollwert für die Drehzahl n
der Zwangsfördereinrichtung 1 in bekannter Weise
in Abhängigkeit vom Istwert der Förderleistung
solange manuell oder automatisch korrigiert, bis die
gewünschte Fördermenge erreicht ist.

Der so gefundene Sollwert für die Drehzahl wird für
die weitere Fabrikationszeit mittels einer
Drehzahl-Regelung in bekannter Weise konstant gehalten.

Bei der Anwendung des beschriebenen Verfahrens
und der Verwendung der beschriebenen Vorrichtung
ist es möglich mit konstanter Drehzahl der Zwangsfördereinrichtung über lange Zeit eine exakte
Dosierung unahängig vom Pumpendruck und dem System-

AG 1703

0037950

druck vorzunehmen, wobei die Abweichungen der Istmenge von der Sollmenge der Dosierung im Bereich von Promille liegen.

Beispiel

Die Wirkung der Druckkonstanthalteeinrichtung soll
an einem Beispiel zahlenmäßig erläutert werden.

Eine Zahnradpumpe mit einer theoretischen Förderleistung von V = 4 ml/U wird mit n = 60 U/min ohne
Druckkonstanthalteeinrichtung betrieben. Bei einer
Viskosität des strömenden Mediums von $\eta$ = 1 m Pas
und einer Anfangsdruckdifferenz von $\triangle$ P = 0,5 bar
beträgt die gemessene Fördermenge $\overset{\text{\tiny I}}{V}$ = 237 ml/min.
Hieraus errechnet sich der Pumpenfaktor

$$f_1 = \overset{\text{\tiny I}}{V}_{ist} / \overset{\text{\tiny I}}{V}_{soll} = \frac{237\ ml/min}{240\ ml/min} = 0,9875\ .$$

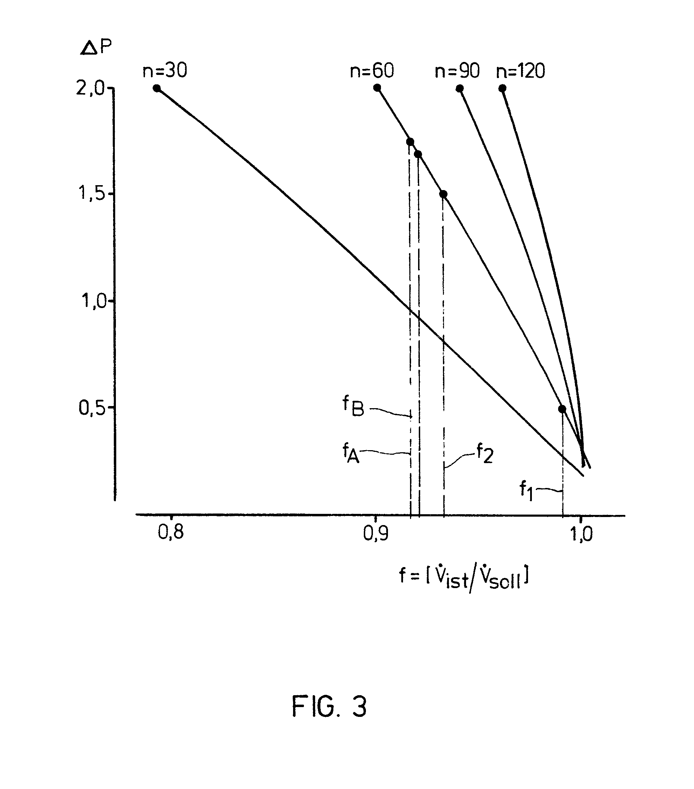

In der Figur 3 sind die Pumpenfaktoren f in Abhängigkeit von $\varDelta$ P für verschiedene Pumpendrehzahlen n
aufgetragen (n = 30, 60, 90, 120).

Während der Laufzeit der Anlage steigt die Druckdifferenz $\triangle$ P unter sonst gleichen Bedingungen von
0,5 bar auf 1,5 bar an. Die gemessene Fördermenge
$\overset{\text{\tiny I}}{V}$ hat sich bei diesem Druckanstieg $\triangle$ P von
$\overset{\text{\tiny I}}{V}$ = 237 ml/min auf 225 ml/min vermindert. Der
Pumpenfaktor ist nun

$$f_2 = \frac{225\ ml/min}{240\ ml/min} = 0,9375$$

AG 1703

und um 0,05, das heißt um 5 %, schlechter (siehe Figur 3). Diese Änderung bedeutet eine um 5 % veränderte Dosiermenge, die für eine genaue Dosieraufgabe, wie zum Beispiel die Versorgung einer Gießeinrichtung mit photographischen Emulsionen zum Beguß von photographischen Materialien, nicht tolerierbar ist.

Bei der Verwendung der beschriebenen Druckkonstanthalteeinrichtung zeigen sich folgende vergleichbare Werte:

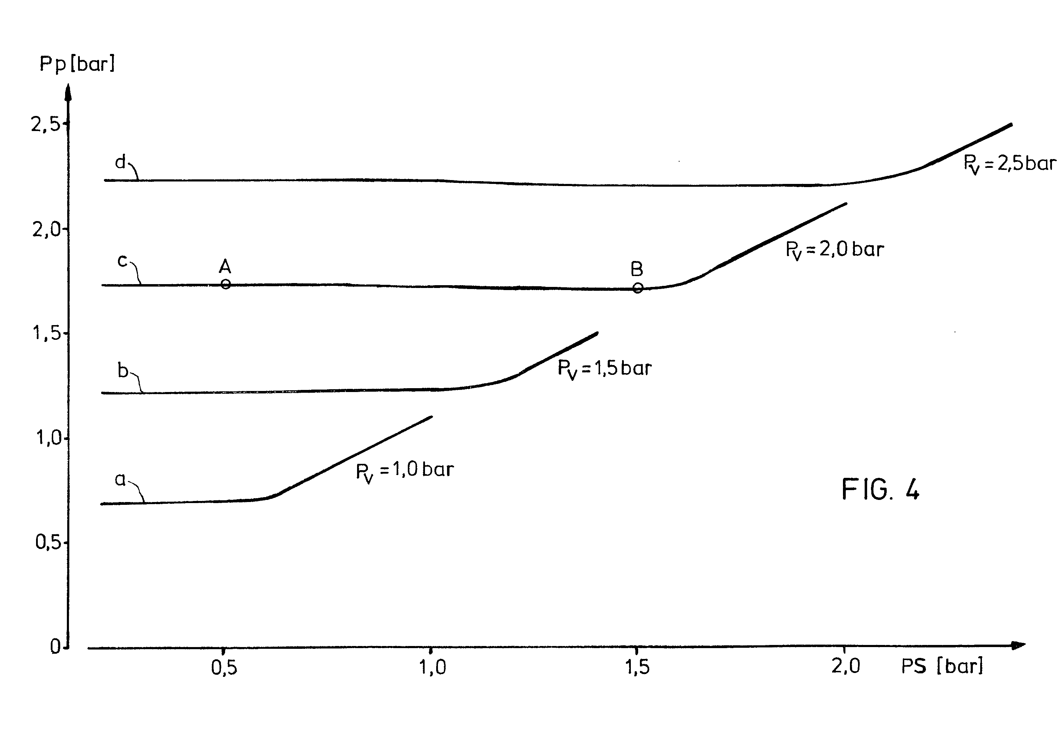

Das Membranglied 2 wird über ein Druckreduzierventil 5 (Figur 1) mit einem konstanten Vorgabedruck von $Pv = 2$ bar beaufschlagt. Das Druckmedium 8 ist Luft. Bei einem Anfangsdruck im System zwischen dem Membranglied 2 und dem Verbraucher 7 von $Ps = 0,5$ bar stellt sich am Ausgang der Pumpe 1 ein Druck von $Pp = 1,72$ bar ein. In Figur 4 sind die Kurven a bis c für die Vordrucke im Membranglied 2 ($Pv = 1$, 1,5, 2, 2,5 bar) in Abhängigkeit vom Pumpendruck $Pp$ und dem Systemdruck $Ps$ nach dem Membranglied aufgetragen. Der Anfangsdruck im System $Ps$ ist in Figur 4 als Punkt A auf der Kurve c) ($Pv = 2$ bar) eingetragen.

Der Pumpenfaktor $f_A$ errechnet sich aus der Fördermenge

$$f_A = \frac{220,3 \text{ ml/min}}{240 \text{ ml/min}} = 0,918.$$

AG 1703

Bei einem Anstieg des Systemdruckes Ps durch Verkrustung oder dergleichen auf 1,5 bar stellt sich ein Pumpendruck von 1,71 bar ein, wie in Figur 4, Kurve c, der Punkt B zeigt.

Der Pumpenfaktor $f_B$ errechnet sich aus der Fördermenge

$$f_B = \frac{220,5 \ ml/min}{240 \ ml/min} = 0,919$$

und ist in Figur 3 als $f_B$ auf der Kurve für n = 60 U/min eingetragen.

Trotz des Anstieges des Systemdruckes $P_s$ von 0,5 auf 1,5 bar auf das dreifache ändert sich der Pumpenfaktor nur um ein Promille und die Dosiermenge nur um 0,2 ml/min entsprechend um 0,08 %.

Figur 3 zeigt auch die Abhängigkeit des Pumpenfaktors f von der Drehzahl der Pumpe und der Druckdifferenz $\Delta P$. Je niedriger die Drehzahl oder der Hub einer Pumpe ist, um so größer werden die Veränderungen des Pumpenfaktors mit der Druckdifferenz $\Delta P$.

Aus Figur 4 ist zu entnehmen, daß das beschriebene Verfahren und die Vorrichtung durch einfache Wahl des Vordruckes $P_v$ im Membranglied 2 in weiten Grenzen an jede Aufgabe anpaßbar ist. Unabhängig vom Systemdruck Ps kann der Druck am Pumpenausgang

AG 1703

Pp und somit das von dem Pumpenfaktor abhängige
Fördervolumen V durch Wahl des Vordruckes Pv im
Membranglied 2 und bei einer konstanten Drehzahl
praktisch konstant gehalten werden.

Das Verfahren eignet sich natürlich auch dazu eine
stets konstante Menge eines flüssigen Mediums aus
einem Vorratsbehälter zu entnehmen unabhängig davon,
welchen Einflüssen das Medium nach Verlassen des
Membrangliedes unterliegt, wenn nur gewährleistet
ist, daß der Vorduck im Membranglied deutlich größer
gewählt ist, als der maximal vorkommende Druck
hinter dem Membranglied.

AG 1703

Patentansprüche

1. Verfahren zur selbsttätigen Druckkonstanthaltung für strömende Medien bei Zwangsförderung, dadurch gekennzeichnet, daß zwischen einer Zwangsfördereinrichtung (1) und einem Verbraucher (7) ein elastisches Membranglied (2) so angeordnet wird, daß die Membrane (3) des Membrangliedes (2) auf der einen Seite dem strömendem Medium (6) und auf der anderen Seite (4) über ein Druckreduzierventil (5) mit einem Druck beaufschlagt wird, der größer ist als der maximal zu erwartende Druck in dem System zwischen der Zwangsfördereinrichtung (1) und dem Verbraucher (7) und daß die Menge des strömenden Mediums mittels der Drehzahl der Zwangsfördereinrichtung (1) eingestellt und geregelt wird.

2. Verfahren zur selbsttätigen Druckkonstanthaltung für strömende Medien nach Anspruch 1, dadurch gekennzeichnet, daß das Membranglied (2) unmittelbar hinter der Zwangsfördereinrichtung (1) angeordnet wird.

3. Verfahren zur selbsttätigen Druckkonstanthaltung für strömende Medien nach Anspruch 1 und 2, dadurch gekennzeichnet, daß der Mindestdruck des Druckmediums (8) von der äußeren Seite (4) auf die Membrane (3) so gewählt wird, daß die Membrane (3) des Membrangliedes (2) den Durchgang für das

AG 1703

flüssige Medium von der Zwangsfördereinrichtung (1) zum Verbraucher (7) vollständig schließt, wenn die Zwangsfördereinrichtung nicht arbeitet.

4. Vorrichtung zur selbsttätigen Druckkonstanthaltung für strömende Medien bei Zwangsförderung zur Durchführung des Verfahrens nach Anspruch 1, dadurch gekennzeichnet, daß ein Einlaufstutzen (11) mittels Gewinde (14) mit einem Rohrkörper (15) und der Rohrkörper (15) mittels Überwurfmutter (9) mit einem Auslaufstutzen (12) so verbunden ist, daß eine elastische Membran (3) mit ihren verdickten Enden (10) abdichtend eingespannt ist und ein dichter Druckraum (4) innerhalb des Rohrkörpers (15) und außerhalb der Membran (3) ensteht und der Raum (4) über einen Druckstutzen (17) mit einem Druckmedium (8) mit Überdruck beaufschlagbar ist.

5. Vorrichtung nach Anspruch 4, dadurch gekennzeichnet, daß der Rohrkörper (15) an der Seite des Einlaufstutzens (11) mit einem eingearbeiteten Dichtungs- und Gewindering (13) zur Aufnahme des Einlaufstutzens (11) und zum Spannen und Abdichten der Membran (3) mittels einer Spannmutter (16) so versehen ist, daß die Membran (3) nach Lösen der Überwurfmutter (9) zusammen in Richtung Pfeil 7 zum Reinigen oder Erneuern der Membran (3) herausdrehbar ist.

AG 1703

FIG.1

FIG. 2

FIG. 3

FIG. 4

0037950
3/3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 908 360 (G.A. MEYER et al.) <br><br> * Spalte 3, Zeile 64 bis Spalte 4, Zeile 65; Figur 2 * <br> --- | 1,2 |
| | FR - A - 1 121 902 (F. LAURENTY) <br><br> * Seite 1, linke Spalte, Zeile 34 bis rechte Spalte, Zeile 14; Seite 2, linke Spalte, Zeilen 1-10; Figuren 1-6 * <br> --- | 4,5 |
| | FR - A - 1 202 447 (RENAULT) <br><br> * Seite 1, linke Spalte, Zeile 28 bis rechte Spalte, Zeile 23; Figur * <br> --- | 4 |
| | DE - A - 2 160 390 (H. HASENKOPF) <br><br> * Seite 2, Zeile 1 bis Seite 3, Zeile 29; Figur * <br><br> --- --- | 4 |

**KLASSIFIKATION DER ANMELDUNG (Int. Cl.)**

F 04 B 49/08
G 05 D 16/06
F 16 K 7/07

**RECHERCHIERTE SACHGEBIETE (Int. Cl.)**

F 04 B 49/08
F 04 B 49/00
F 04 B 13/00
F 04 B 21/02
G 05 D 16/06
F 16 K 7/07

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27.07.1981 | POINT |

EPA form 1503.1   06.78